# EUROPEAN PATENT SPECIFICATION

(11) **EP 3 808 963 B1**
(45) Date of publication and mention of the grant of the patent: **18.01.2023**
(21) Application number: 20196568.8
(22) Date of filing: 17.09.2020
(51) Int. Cl.: F02K 3/06, F02K 3/075, F01D 15/08, F01D 15/10

(54) **GAS TURBINE ENGINE**
GASTURBINENTRIEBWERK
MOTEUR DE TURBINE À GAZ

(30) Priority: 17.10.2019 GB 201915015
(43) Date of publication of application: 21.04.2021
(73) Proprietor: Rolls-Royce plc, London N1 9FX (GB)
(72) Inventor: Harvey, Giles, Derby, Derbyshire DE24 8BJ (GB)
(74) Representative: Rolls-Royce plc

(56) References cited:
- GB-A- 2 444 838

## Description

### Field of the disclosure

The present disclosure relates to a gas turbine engine, which may be a turbofan gas turbine engine that may optionally be geared, and in particular to arrangements of turbine blades around an exhaust nozzle of an engine core of such a turbine.

### Background

To extract auxiliary power from a gas turbine engine, an electrical generator may be used, linked in some way to rotation of the turbine components of the engine. One way of achieving this is to incorporate an electrical generator into an aft section of a gas turbine engine, an example of which is disclosed in United States patent application US 2008/0143115 A1. In this, a generator is disposed aft of the low pressure turbine spool to generate power for electrical demands of an aircraft system. A duct diverts a portion of the airflow from the exhausted flow aft of the low pressure turbine through turbine blades of the generator during idle or lower operating levels of the engine, and the flow path is selectively diverted such that the exhausted air from the low pressure turbine is only drawn through the aft turbine blades when additional power extraction is required to produce electrical energy to the aircraft. A problem associated with extracting power from the engine in this way is how to improve the efficiency of power transfer.

United Kingdom Patent Publication GB 2444838 A relates to a gas turbine engine generator located aft of the low pressure turbine.

### Summary

The present disclosure provides a gas turbine engine as set out in the appended claims.

According to a first aspect there is provided a gas turbine engine for an aircraft comprising: an engine core comprising a turbine, a compressor and a core shaft connecting the turbine to the compressor, the engine core comprising an inlet upstream of the compressor and an exhaust nozzle at a downstream outlet of the turbine; a fan located upstream of the engine core inlet; a rotating machine; and a set of exhaust nozzle vanes spanning the exhaust nozzle, the turbine comprising a first row of turbine blades upstream of the exhaust nozzle vanes and a second row of turbine blades downstream of the exhaust nozzle guide vanes, each of the exhaust nozzle guide vanes comprising a passage configured to direct airflow downstream from the first row of turbine blades towards the second row of turbine blades. The rotating machine is connected to the second row of turbine blades via a gearbox or a clutch

The combination of a second row of turbine blades and a passage configured to direct airflow through an exhaust nozzle guide vane allows power to be extracted from the exhaust airflow of the turbine while reducing or minimising the effect this has on the overall exhaust airflow through using space within the exhaust nozzle guide vanes.

An inlet of the passage may be positioned to entrain airflow at a maximum pressure exiting from the first row of turbine blades. Positioning the inlet to capture the maximum airflow pressure is expected to improve efficiency in terms of work done by the captured airflow.

The inlet may for example extend between around 20% and 80% of the span of an exhaust nozzle guide vane, or alternatively between around 30% and 70% or between 40% and 60%. This will tend to capture a maximum airflow pressure exhausting from the turbine, which generally occurs across a mid-region of the exhaust airflow.

If the first row of turbine blades is a final downstream row of turbine blades immediately upstream of the exhaust nozzle vanes, the first row of turbine blades have a first blade tip diameter, the second row of turbine blades have a second blade tip diameter, and the second blade tip diameter is smaller than the first blade tip diameter. In some examples the second blade tip diameter may be less than around 70% of the first blade tip diameter, and optionally greater than around 30% of the first blade tip diameter.

A span of each blade in the second row of turbine blades may be between around 20% and around 50% of a span of each blade in the first row of turbine blades.

In some examples the passage may extend to a duct that surrounds the second row of turbine blades.

The passage may comprise an adjustable valve arranged to control an amount of airflow through the passage.

The rotating machine may for example be an electrical generator or a hydraulic pump. A gearbox connected between the rotating machine and the second row of turbine blades may allow for the rotational speed of the rotating machine to be different to that of the second row of turbine blades to allow the rotating machine to operate more efficiently.

A clutch may be provided to selectively engage rotation of the second row of turbine blades with rotation of the first row of turbine blades, thereby enabling the second row of turbine blades to contribute to the power provided by the gas turbine engine along the shaft on which the first row of turbine blades is mounted.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4. The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminiumlithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc).

Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the accompanying drawings, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic diagram of an aft section of an example gas turbine engine;
**Figure 5** is a schematic diagram of an aft section of an example gas turbine engine with an additional row or turbine blades; and
**Figure 6** is a schematic partial sectional view of the gas turbine engine of Figure 5.

### Detailed description

Aspects and embodiments of the present disclosure will now be discussed with reference to the accompanying figures. Further aspects and embodiments will be apparent to those skilled in the art.

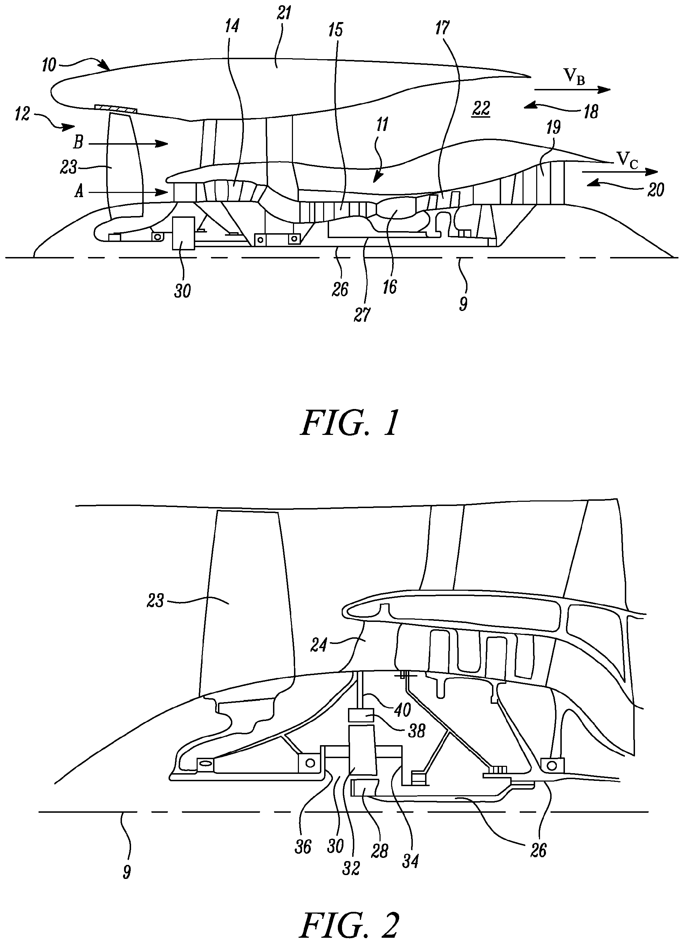

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

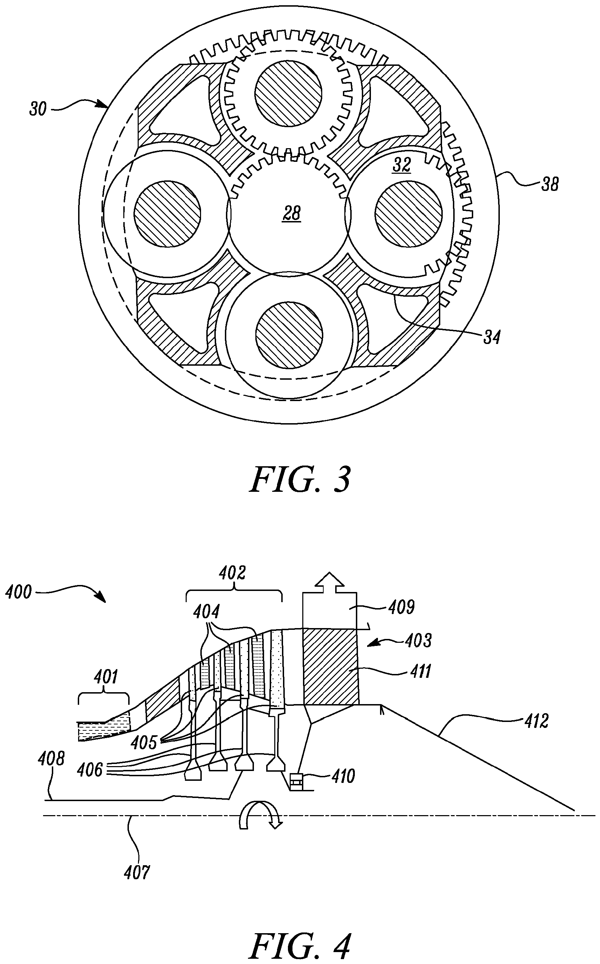

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the engine core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

**Figure 4** illustrates in simplified schematic sectional form the aft section of an example gas turbine engine 400, illustrating a gas flow path from a high pressure turbine stage 401 through to a low pressure turbine 402 and exhaust 403. The low pressure turbine 402 comprises a plurality of rows 404 of vanes alternating with a plurality of rows 405 of turbine blades. The rows 405 of turbine blades are mounted to respective discs 406 and rotate together about a rotational axis 407 on a turbine shaft 408, which connects through to the front of the engine for driving a compressor and/or fan of the engine. The shaft 408 is mounted for rotation to a bearing 410. A row of exit vanes 411 span the exhaust 403, supporting the engine 400 to a rear engine mount static structure 409. In operation, airflow from the high pressure turbine 401 expands as it flows through to the low pressure turbine 402 and exits the engine 400 between the exit vanes 411 over an engine plug 412, along with airflow from the bypass duct 22 (Figure 1).

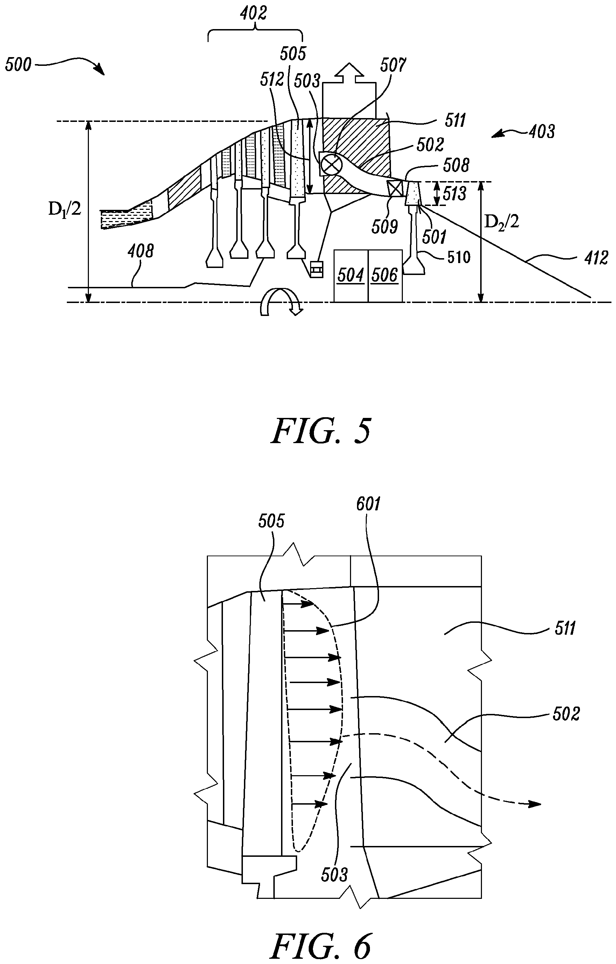

**Figure 5** illustrates in simplified schematic sectional form the aft section of an example gas turbine engine 500 similar to that of Figure 4, but with a second row 501 of turbine blades downstream of the exhaust nozzle guide vanes 511 in addition to a first row 505 of turbine blades upstream of the vanes 511, the first row 505 being part of the low pressure turbine 402 of the engine 500. A passage 502 is provided in each guide vane 511 that is configured to direct airflow downstream from the first row 505 of turbine blades towards the second row 501 of turbine blades.

An inlet 503 of the passage 502 is positioned to entrain airflow at a maximum pressure exiting from the first row 505 of turbine blades. As shown in **Figure 6****,** the air pressure 601 varies across the span 512 of the vane 511, reaching a maximum at around halfway across the span. The inlet 503 may therefore be positioned such that it extends between around 20% and 80% of the span of the vane 511, or alternatively between around 30% and 70% of the span of the vane 511, or further alternatively between around 40% and 60% of the span of the vane 511.

The tip diameter D₂ of the second row 501 of turbine blades is substantially smaller than the tip diameter D₁ of the first row 505 of turbine blades. The tip diameter D₂ of the second row 501 of turbine blades may for example be less than around 70% of the tip diameter of the first row 505 of turbine blades, and may be between around 30% and 70% of the tip diameter of the first row 505.

The span 513 of each blade in the second row 501 is substantially smaller than the span 512 of each blade in the first row 505, and may for example be between around 20% and 50% of the span 512 of each blade in the first row 505.

In the example shown in Figure 5, the second row 501 of turbine blades drives a rotating machine 504, which may for example be an electrical generator or a hydraulic pump. A hydraulic pump may be used for pumping lubricant and/or cooling fluid through the engine, whereas an electrical generator may provide electrical power for powering aircraft electrical systems. In some examples a gearbox 506 may be connected between the rotating machine and the second row 501 of turbine blades.

The second row 501 of turbine blades may be mounted to a disc 510, as with the first row 505 and other rows of turbine blades in the turbine 402.

In alternative examples to that shown in Figure 5, the first and second rows 505, 501 of turbine blades may be mounted for rotation on a common shaft, for example the turbine shaft 408. A connection between the second row 501 and the turbine shaft 408 may be made via a clutch and/or a gearbox to enable rotation of the second row 501 to be engaged and disengaged and its rotational speed matched to that of the turbine shaft 408. In other examples the connection may be fixed, so that a rotational speed of the first and second rows 505, 501 is the same. The gearbox 506 may allow the second row 501 of turbine blades to run faster than those of the turbine 402.

An adjustable valve 507 may be provided in the passage 502, for example positioned at or adjacent the inlet 503, to allow airflow through the passage 502 and through to the second row 501 of turbine blades to be controlled.

In each of the examples described and illustrated herein, a row of turbine blades comprises a plurality of turbine blades that are mounted around the circumference of a common disc at a common axial position along a length of the engine core.

The passage 502 through each of the guide vanes 511 may lead to a duct 508 that extends around an inner circumference of the exhaust 403, forming an annular gallery that distributes air flowing from each passage through to the second row 501 of turbine blades, the duct 508 and passages 502 together forming a manifold that collects and distributes airflow downstream of the first row 505 of turbine blades to the second row 501 of turbine blades. Inlet guide vanes 509 may be provided in the duct 508 immediately upstream of the second row 501 of turbine blades to direct airflow. The inlet guide vanes 509 may be variable to control the airflow entering the second row 501 of turbine blades. The variable vane 509 can be used to control the speed of a generator independently from other stages of the turbine 402, and may allow for a reduction in the exit airflow Mach number.

The rotating machine 504 may be positioned fore or aft in relation to the position of the second row 501 of turbine blades. The rotating machine 504 may for example be positioned within the plug 412 downstream of the exhaust 403. The plug 412 may be mounted to rotate along with the second row 501 of turbine blades or may be fixed in relation to the engine support structure 409.

The power drawn by the second row 501 of turbine blades as a proportion of the total power generated by the turbine 402 may be around 10%. For a 2,000 HP (1.5 MW) turbine, the power drawn by the second row 501 may be around 200 HP (150 kW). This power may be provided as electrical power via an electrical generator or hydraulic power via a hydraulic pump or as additional power fed back along the turbine shaft.

A clutch may be provided that enables an electrical or hydraulic generator to be engaged when needed and for the second row 501 of turbine blades to be otherwise engaged with the other rows of turbine blades in the turbine. Electrical power may be extracted for example during descent of the aircraft.

A further advantage is being able to controllably share power between shafts so that power generated on the low pressure turbine can be redistributed to other shafts on the engine via electrical power.

## Claims

1. A gas turbine engine (500) for an aircraft comprising:
an engine core (11) comprising a turbine (402), a compressor (14), and a core shaft (26) connecting the turbine to the compressor, the engine core (11) comprising an inlet upstream of the compressor (14) and an exhaust nozzle (403) at a downstream outlet of the turbine (402);
a fan (23) located upstream of the engine core inlet;
a rotating machine (504); and
a set of exhaust nozzle vanes (411) spanning the exhaust nozzle (403),
the turbine (402) comprising a first row (505) of turbine blades upstream of the exhaust nozzle vanes (511) and a second row (501) of turbine blades downstream of the exhaust nozzle guide vanes (511), each of the exhaust nozzle guide vanes (511) comprising a passage (502) configured to direct airflow downstream from the first row (505) of turbine blades towards the second row (501) of turbine blades;
**characterized in that** the rotating machine (504) is connected to the second row of turbine blades via a gearbox (506) or a clutch.

2. The gas turbine engine (500) of claim 1, wherein an inlet (503) of the passage (502) extends between around 30% and 70% of a span of the exhaust nozzle guide vanes (511).

3. The gas turbine engine (500) of claim 2, wherein the inlet (503) of the passage (502) extends between around 20% and 80% of the span of the exhaust nozzle guide vanes (511).

4. The gas turbine engine (500) of any preceding claim, wherein the first row (505) of turbine blades is a final downstream row of turbine blades immediately upstream of the exhaust nozzle guide vanes (511), the first row (505) of turbine blades have a first blade tip diameter, the second row (501) of turbine blades have a second blade tip diameter, and the second blade tip diameter is smaller than the first blade tip diameter.

5. The gas turbine engine (500) of claim 4, wherein the second blade tip diameter is less than 70% of the first blade tip diameter.

6. The gas turbine engine (500) of claim 5, wherein the second blade tip diameter is greater than around 30% of the first blade tip diameter.

7. The gas turbine engine (500) of any one of claims 4 to 6, wherein a span of each blade in the second row (501) of turbine blades is between around 20% and around 50% of a span of each blade in the first row (505) of turbine blades.

8. The gas turbine engine (500) of any preceding claim, wherein the passage (502) extends to a duct surrounding the second row of turbine blades.

9. The gas turbine engine of any preceding claim, wherein the passage comprises an adjustable valve arranged to control an amount of airflow through the passage.

10. The gas turbine engine of any one of the preceding claims, wherein the rotating machine is an electrical generator or a hydraulic pump.

11. The gas turbine engine according to any preceding claim, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

## Patentansprüche

1. Gasturbinentriebwerk (500) für ein Flugzeug, umfassend:
einen Triebwerkskern (11), umfassend eine Turbine (402), einen Verdichter (14) und eine Kernwelle (26), die die Turbine mit dem Verdichter verbindet, der Triebwerkskern (11) umfassend einen Einlass stromaufwärts von dem Verdichter (14) und eine Auslassdüse (403) an einem stromabwärtigen Auslass der Turbine (402);
einen Fan (23), der sich stromaufwärts von dem Triebwerkskerneinlass befindet;
eine drehende Maschine (504); und
einen Satz Auslassdüsenschaufeln (411), die die Auslassdüse (403) überspannen,
die Turbine (402) umfassend eine erste Reihe (505) von Turbinenblättern stromaufwärts von den Auslassdüsenschaufeln (511) und eine zweite Reihe (501) von Turbinenblättern stromabwärts von den Auslassdüsenschaufeln (511), jede der Auslassdüsenschaufeln (511) umfassend einen Durchgang (502), der konfiguriert ist, um einen Luftstrom stromabwärts von der ersten Reihe (505) von Turbinenblättern in Richtung der zweiten Reihe (501) von Turbinenblättern zu leiten;
**dadurch gekennzeichnet, dass** die drehende Maschine (504) über ein Getriebe (506) oder eine Kupplung mit der zweiten Reihe von Turbinenblättern verbunden ist.

2. Gasturbinentriebwerk (500) nach Anspruch 1, wobei sich ein Einlass (503) des Durchgangs (502) zwischen etwa 30 % und 70 % einer Spannweite der Auslassdüsenschaufeln (511) erstreckt.

3. Gasturbinentriebwerk (500) nach Anspruch 2, wobei sich der Einlass (503) des Durchgangs (502) zwischen etwa 20 % und 80 % der Spannweite der Auslassdüsenschaufeln (511) erstreckt.

4. Gasturbinentriebwerk (500) nach einem der vorherigen Ansprüche, wobei die erste Reihe (505) von Turbinenblättern eine letzte stromabwärtige Reihe von Turbinenblättern unmittelbar stromaufwärts von den Auslassdüsenschaufeln (511) ist, die erste Reihe (505) von Turbinenblättern einen ersten Blattspitzendurchmesser aufweist, die zweite Reihe (501) von Turbinenblättern einen zweiten Blattspitzendurchmesser aufweist und der zweite Blattspitzendurchmesser kleiner ist als der erste Blattspitzendurchmesser.

5. Gasturbinentriebwerk (500) nach Anspruch 4, wobei der zweite Blattspitzendurchmesser weniger ist als 70 % des ersten Blattspitzendurchmessers.

6. Gasturbinentriebwerk (500) nach Anspruch 5, wobei der zweite Blattspitzendurchmesser größer ist als etwa 30 % des ersten Blattspitzendurchmessers.

7. Gasturbinentriebwerk (500) nach einem der Ansprüche 4 bis 6, wobei eine Spannweite von jedem Blatt in der zweiten Reihe (501) von Turbinenblättern zwischen etwa 20 % und etwa 50 % der Spannweite jedes Blatts in der ersten Reihe (505) von Turbinenblättern ist.

8. Gasturbinentriebwerk (500) nach einem der vorherigen Ansprüche, wobei sich der Durchgang (502) zu einem Kanal erstreckt, der die zweite Reihe von Turbinenblättern umgibt.

9. Gasturbinentriebwerk nach einem der vorherigen Ansprüche, wobei der Durchgang ein einstellbares Ventil umfasst, das angeordnet ist, um eine Menge eines Luftstroms durch den Durchgang zu steuern.

10. Gasturbinentriebwerk nach einem der vorherigen Ansprüche, wobei die drehende Maschine ein elektrischer Generator oder eine Hydraulikpumpe ist.

11. Gasturbinentriebwerk nach einem der vorherigen Ansprüche, wobei:
die Turbine eine erste Turbine (19) ist, der Verdichter ein erster Verdichter (14) ist und die Kernwelle eine erste Kernwelle (26) ist;
der Triebwerkskern ferner eine zweite Turbine (17), einen zweiten Verdichter (15) und eine zweite Kernwelle (27), die die zweite Turbine mit dem zweiten Verdichter verbindet, umfasst; und
die zweite Turbine, der zweite Verdichter und die zweite Kernwelle angeordnet sind, um mit einer höheren Drehzahl zu drehen als die erste Kernwelle.

## Revendications

1. Moteur à turbine à gaz (500) pour un aéronef comprenant :
un noyau de moteur (11) comprenant une turbine (402), un compresseur (14) et un arbre de noyau (26) reliant la turbine au compresseur, le noyau de moteur (11) comprenant une entrée en amont du compresseur (14) et une tuyère d'échappement (403) au niveau d'une sortie en aval de la turbine (402) ;
une soufflante (23) située en amont de l'entrée du noyau de moteur ;
une machine tournante (504) ; et
un ensemble d'aubes fixes (411) de tuyère d'échappement traversant la tuyère d'échappement (403),
la turbine (402) comprenant une première rangée (505) d'aubes de turbine en amont des aubes fixes de tuyère d'échappement (511) et une seconde rangée (501) d'aubes de turbine en aval des aubes fixes directrices (511) de tuyère d'échappement, chacune des aubes fixes directrices (511) de tuyère d'échappement comprenant un passage (502) conçu pour diriger un flux d'air en aval de la première rangée (505) d'aubes de turbine vers la seconde rangée (501) d'aubes de turbine ;
**caractérisé en ce que** la machine tournante (504) est reliée à la seconde rangée d'aubes de turbine par l'intermédiaire d'une boîte d'engrenages (506) ou d'un embrayage.

2. Moteur à turbine à gaz (500) selon la revendication 1, une entrée (503) du passage (502) s'étendant entre environ 30 % et 70 % d'une envergure des aubes fixes directrices (511) de tuyère d'échappement.

3. Moteur à turbine à gaz (500) selon la revendication 2, ladite entrée (503) du passage (502) s'étendant entre environ 20 % et 80 % de l'envergure des aubes fixes directrices (511) de tuyère d'échappement.

4. Moteur à turbine à gaz (500) selon une quelconque revendication précédente, ladite première rangée (505) d'aubes de turbine étant une dernière rangée en aval d'aubes de turbine immédiatement en amont des aubes fixes directrices (511) de tuyère d'échappement, la première rangée (505) d'aubes de turbine possédant un premier diamètre de pointe d'aube, la seconde rangée (501) d'aubes de turbine possédant un second diamètre de pointe d'aube, et ledit second diamètre de pointe d'aube étant inférieur au premier diamètre de pointe d'aube.

5. Moteur à turbine à gaz (500) selon la revendication 4, ledit second diamètre de pointe d'aube étant inférieur à 70 % du premier diamètre de pointe d'aube.

6. Moteur à turbine à gaz (500) selon la revendication 5, ledit second diamètre de pointe d'aube étant supérieur à environ 30 % du premier diamètre de pointe d'aube.

7. Moteur à turbine à gaz (500) selon l'une quelconque des revendications 4 à 6, une envergure de chaque aube dans la seconde rangée (501) d'aubes de turbine étant comprise entre environ 20 % et environ 50 % d'une envergure de chaque aube dans la première rangée (505) d'aubes de turbine.

8. Moteur à turbine à gaz (500) selon une quelconque revendication précédente, ledit passage (502) s'étendant jusqu'à un conduit entourant la seconde rangée d'aubes de turbine.

9. Moteur à turbine à gaz selon une quelconque revendication précédente, ledit passage comprenant une soupape réglable agencée pour commander une quantité d'écoulement d'air à travers le passage.

10. Moteur à turbine à gaz selon une quelconque revendication précédente, ladite machine tournante étant un générateur électrique ou une pompe hydraulique.

11. Moteur à turbine à gaz selon une quelconque revendication précédente,
ladite turbine étant une première turbine (19), ledit compresseur étant un premier compresseur (14) et ledit arbre de noyau étant un premier arbre de noyau (26) ;
ledit noyau de moteur comprenant en outre une seconde turbine (17), un second compresseur (15) et un second arbre de noyau (27) reliant la seconde turbine au second compresseur ; et
ladite seconde turbine, ledit second compresseur et ledit second arbre de noyau étant agencés pour tourner à une vitesse de rotation plus élevée que le premier arbre de noyau.
